# DEMANDE DE BREVET EUROPEEN

(11) **EP 4 707 646 A1**
(43) Date de publication de la demande: **11.03.2026**
(21) Numéro de dépôt: 25200339.7
(22) Date de dépôt: 04.09.2025
(51) Int. Cl.: F16K 7/12, F16K 27/02

(54) **VANNE À MEMBRANE**

(30) Priorité: 06.09.2024 FR 2409484
(71) Demandeur: ASCO SAS, 28110 Lucé (FR)
(72) Inventeur: SCHMIDT, Michel, 28170 CHATEAUNEUF EN THYMERAIS (FR); GLANDOR, Olivier, 28190 FONTAINE LA GUYON (FR); LEMERCIER, Romain, 28000 CHARTRES (FR)
(74) Mandataire: Ipsilon

(57) **Abrégé**

Vanne comportant :
- un corps de vanne (2),
- une membrane obturatrice (6),
- un chapeau (10) rapporté sur la membrane obturatrice,
- une pluralité d'éléments de fixation (16) fixés sur le chapeau (10), présentant chacun une tête (40), et
au moins un élément de verrouillage (15) maintenu captif sur le corps de vanne, mobile entre une position déverrouillée où il permet le passage de la tête des éléments de fixation correspondants et une position verrouillée où il s'engage sous la tête des éléments de fixation pour permettre la fixation du chapeau (10) sur le corps de vanne (2) par serrage du ou des éléments de fixation (16).

## Description

### Domaine technique

La présente invention concerne les vannes à membrane.

### Technique antérieure

Les vannes à membrane comportent un corps de vanne supportant une membrane servant d'obturateur. La membrane est maintenue par un chapeau fixé au corps de vanne. Un actionneur comportant un mécanisme d'entraînement agit sur la vanne pour la déformer et lui faire prendre des configurations ouverte ou fermée.

Les membranes utilisées dans ce type de vannes peuvent connaître une usure intense, ce qui nécessite de les changer régulièrement. C'est particulièrement le cas dans les vannes aseptiques où la stérilisation à la vapeur des éléments de la vanne tend à dégrader la membrane, ce qui en fait un consommable devant être remplacé très fréquemment.

Le chapeau et le corps de vanne sont généralement assemblés par un nombre de vis, goujons ou boulons qui peut être important selon le type de vanne, qu'il va falloir dévisser puis revisser complètement. Pendant tout le temps de réassemblage de la vanne, l'opérateur doit maintenir en position l'actionneur, ainsi que les éléments de fixation pour éviter qu'ils ne tombent. Il est parfois nécessaire également de suivre un schéma de vissage croisé, pour assurer une bonne compression de la membrane. Il en résulte que le changement d'une membrane est à la fois long et peu pratique.

US9638339B2, US2022128162A1 et US11236833B2 décrivent des vannes à membrane dans lesquelles la base du chapeau présente des crochets venant s'attacher par un mouvement de rotation sur des éléments dépassant du corps de la vanne.

EP3333465B1, EP4067709A1 et WO2022128640A1 divulguent des vannes à membrane dont le chapeau s'attache au corps de la vanne par un système inspiré des fixations de type baïonnette. Par un mouvement de rotation, des éléments fixés sur le corps de la vanne s'engagent dans la partie la plus étroite des fixations et se retrouvent ainsi bloqués. US2015/0354718A1 divulgue une vanne dans laquelle le corps de vanne porte des éléments de fixation sous les têtes desquels peuvent s'engager des pattes d'une bague de verrouillage.

DE102022108766 décrit une vanne à membrane dans laquelle la base du chapeau comporte un crochet de verrouillage qui s'engage avec une structure de verrouillage d'un raccord de la vanne dans une position fermée du crochet de verrouillage. La vanne comporte plusieurs tiges de guidage qui traversent le raccord et une plaque de verrouillage permettant le passage des tiges et leur fixation sur la plaque.

DE102017209459 décrit un système de fixation d'un actionneur sur une bride d'une vanne sans outil.

Ces différents dispositifs connus de l'art antérieur permettent de détacher facilement le chapeau du corps de la vanne pour accéder à la membrane. Néanmoins, pour assurer l'étanchéité externe de la vanne, de nombreuses pièces supplémentaires, comme des systèmes de serrage de membrane par précontrainte à l'aide de bagues et de rondelles Belleville ou autres systèmes de ressort, sont nécessaires, ce qui complexifie la structure de la vanne.

Il existe donc un besoin pour bénéficier d'une vanne à membrane permettant de remplacer aisément et rapidement la membrane, tout en conservant une structure relativement simple pour assurer l'étanchéité à la fois interne et externe de la vanne.

### Résumé de l'invention

L'invention vise à répondre à ce besoin et a pour objet, selon l'un de ses aspects, une vanne comportant :
- un corps de vanne traversé par des ouvertures,
- une membrane obturatrice,
- un chapeau rapporté sur la membrane obturatrice,
- une pluralité d'éléments de fixation fixés sur le chapeau, présentant chacun une tête dépassant d'une ouverture correspondante du corps de vanne, et
- au moins un élément de verrouillage d'au moins l'un desdits éléments de fixation, maintenu captif sur le corps de vanne, mobile entre une position déverrouillée (i.e. de montage) où il permet le passage de la tête du ou des éléments de fixation correspondants et une position verrouillée (i.e. de blocage) où il s'engage sous la tête du ou des éléments de fixation pour permettre la fixation du chapeau sur le corps de vanne par serrage du ou des éléments de fixation.

L'invention présente de nombreux avantages.

Tout d'abord, elle facilite le remplacement de la membrane. Le démontage du corps de vanne peut s'effectuer rapidement, car ce dernier est maintenu en position dès lors que le ou les éléments de verrouillage sont amenés en position verrouillée. Cela permet de libérer les mains de l'opérateur jusqu'à l'opération suivante, qui peut être la saisie d'une clé pour le serrage des éléments de fixation. En cas d'endommagement des éléments de fixation, le chapeau et ceux-ci peuvent être remplacés sans avoir à démonter le corps de vanne du circuit fluidique auquel il est connecté, par exemple à dessouder les raccords d'entrée et de sortie. De plus, l'accès aux éléments de fixation n'est entravé par aucune partie de la vanne, car les têtes des éléments de fixation se situent du côté opposé à l'actionneur. Ainsi, le vissage ou dévissage des éléments de fixation peut s'effectuer facilement avec un outil standard tel qu'une visseuse motorisée. L'accès à la membrane est également facilité.

Enfin, la disposition des éléments de fixation du côté intérieur du chapeau permet de réaliser si on le souhaite celui-ci sans aspérités ou renfoncements de son côté extérieur (i.e. supérieur quand la vanne est orientée tête en haut), et donc de limiter le risque d'accumulation de salissures, ce qui facilite le nettoyage de la vanne et présente un fort intérêt dans des environnements soumis à des normes d'hygiène strictes, tels que l'industrie alimentaire, pharmaceutique ou cosmétique.

La vanne peut comporter un seul ou plusieurs éléments de verrouillage, selon les variantes, et ce ou ces éléments de verrouillage peuvent être rendus mobiles relativement au corps de vanne de plusieurs façons, en coulissement ou en rotation.

Le ou chaque élément de verrouillage est ainsi monté, dans des exemples de mise en œuvre de l'invention, de façon à pouvoir coulisser sur le corps de vanne.

Le ou chaque élément de verrouillage peut être configuré, dans des exemples, pour s'engager simultanément sous les têtes de deux éléments de fixation ou plus, en position verrouillée. La vanne comporte par exemple quatre éléments de fixation disposés deux à deux de part et d'autre d'un renflement du corps de vanne, chaque élément de verrouillage peut être monté d'un côté dudit renflement. Les éléments de verrouillage peuvent être montés symétriquement par rapport à un axe longitudinal de la vanne. Le ou chaque élément de verrouillage comporte avantageusement une ouverture permettant le passage de la tête de l'un des éléments de fixation en position déverrouillée.

Le ou chaque élément de verrouillage peut encore être monté rotatif sur le corps de vanne.

La vanne comporte alors par exemple deux éléments de verrouillage montés rotatifs autour d'un axe de rotation commun. Ces éléments de verrouillage peuvent comporter chacun à une extrémité une portion amincie traversée par un trou, les portions amincies étant décalées dans l'épaisseur de l'élément de verrouillage de manière à se superposer au niveau de l'articulation tout en permettant aux éléments de verrouillage de pivoter dans un même plan. La vanne peut comporter deux paires d'éléments de verrouillage disposées de part et d'autre d'un renflement du corps de vanne.

Dans une variante de mise en œuvre de l'invention, l'élément de verrouillage est agencé pour s'engager simultanément sous toutes les têtes des éléments de fixation.

L'élément de verrouillage peut alors présenter en vue de dessous une forme générale de H avec quatre branches et une articulation centrale ; au moins deux branches diamétralement opposées peuvent comporter une encoche, de préférence en forme d'arc de cercle, agencé pour permettre le passage de la tête d'un élément de fixation correspondant par un mouvement axial, et toutes les branches peuvent comporter une ouverture en forme générale de U définissant un appui pour la tête d'un élément de fixation respectif une fois l'élément de verrouillage amené dans la position verrouillée.

De préférence, quel que soit le montage, coulissant ou rotatif, du ou des éléments de verrouillage, le ou chaque élément de verrouillage comporte, de préférence au niveau d'au moins une, et mieux de chaque ouverture destinée à recevoir un élément de fixation à verrouiller, un relief de retenue s'opposant au déverrouillage de l'élément de verrouillage, i.e. à un mouvement de l'élément de verrouillage vers la position initiale déverrouillée libérant le ou les éléments de fixation, par exemple un relief formé par le contour d'un lamage centré sur l'axe de l'élément de fixation et de diamètre suffisant pour recevoir ladite tête.

De préférence, les éléments de fixation sont filetés.

De préférence également, le chapeau comporte des fûts taraudés intérieurement, traversant des trous correspondants de la membrane, et les éléments de fixation sont des vis, notamment au standard ISO CHC, vissées dans ces fûts.

Les fûts peuvent présenter une surface extérieure lisse au contact de la membrane, ce qui limite le risque d'endommagement de celle-ci et peut contribuer à son positionnement précis sur le chapeau. De préférence, ces fûts sont engagés dans des perçages de diamètre correspondant de la membrane, avec de préférence la présence d'un jeu de montage quand la membrane est neuve. L'utilisation de vis standards facilite leur remplacement en cas d'endommagement, et permet de limiter le coût de fabrication.

Les fûts peuvent présenter une extrémité libre de forme tronconique, ce qui facilite le montage de la membrane.

Les fûts peuvent être réalisés d'une seule pièce de manière monolithique avec le chapeau. La vanne comporte un actionneur qui peut être de tout type. Cet actionneur agit sur la membrane et se situe du même côté que le chapeau, à l'opposé du corps de vanne relativement à la membrane.

L'invention a encore pour objet un procédé de changement d'une membrane d'une vanne selon l'invention, comprenant les étapes consistant à :
- dévisser, de préférence en moins de dix tours, mieux moins de cinq, les éléments de fixation,
- déplacer le ou les éléments de verrouillage dans la position déverrouillée,
- séparer le corps de vanne du chapeau,
- remplacer la membrane par une nouvelle,
- replacer le corps de vanne sur le chapeau, en faisant passer les éléments de fixation à travers les ouvertures du corps de vanne,
- amener le ou les éléments de verrouillage en position verrouillée,
- serrer les éléments de fixation pour fixer la membrane entre le corps de vanne et le chapeau.

Le dévissage des éléments de fixation s'effectue de préférence avec le moins de tours possible, suffisamment pour décomprimer la membrane et pouvoir dégager le relief de retenue précité.

### Brève description des dessins

L'invention pourra être mieux comprise à la lecture de la description qui va suivre, d'exemples de mise en œuvre non limitatifs de celle-ci, et à l'examen du dessin annexé, sur lequel :
[Fig 1] est une vue en perspective d'un exemple de vanne selon l'invention,
[Fig 2] est une vue analogue à la figure 1, sous un autre angle de vue,
[Fig 3] est une vue en perspective, de dessous, de la vanne, en position de déverrouillée,
[Fig 4] est une vue analogue à la figure 3, en position verrouillée
[Fig 5] représente la vanne avant montage du corps de vanne et de la membrane,
[Fig 6] est une vue analogue à la figure 5, sous un autre angle de vue,
[Fig 7] est une vue en perspective, de dessous, d'une variante de réalisation de la vanne,
[Fig 8] représente les éléments de verrouillage de la vanne de la figure 7 en position déverrouillée,
[Fig 9] est une vue analogue à la figure 7 avec les éléments de verrouillage déverrouillés,
[Fig 10] est une vue en perspective, de dessous, d'une variante de réalisation de la vanne, avec les éléments de verrouillage représentés en position déverrouillée,
[Fig 11] est une vue de dessous avec les éléments de verrouillage en position déverrouillée, et
[Fig 12] est une vue analogue à la figure 11 avec les éléments de verrouillage en position verrouillée.

### Description détaillée

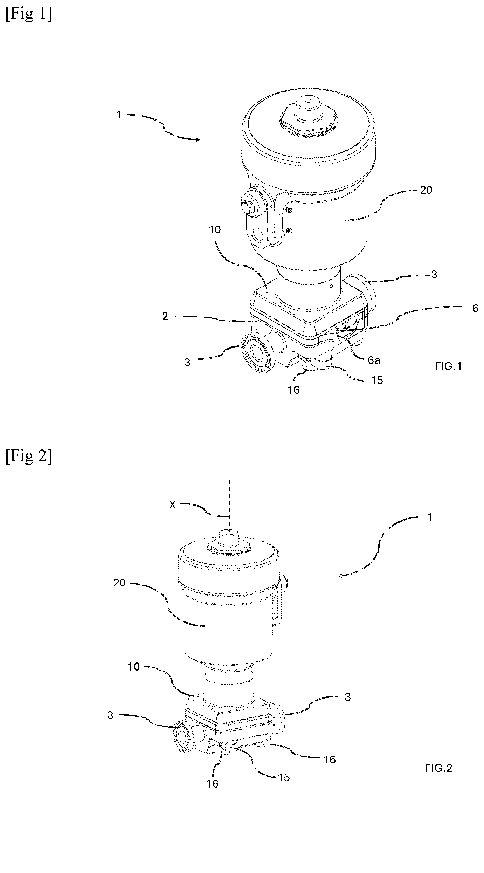

La vanne 1 représentée sur les figures 1 à 6 comporte un corps de vanne 2 pouvant présenter, comme illustré, deux raccords 3 disposés sur deux côtés opposés. Les raccords 3 peuvent être à bride ou des raccords filetés ou soudés. Le fluide à contrôler au moyen de la vanne 1 peut entrer par l'un des raccords, traverser le corps 2 lorsque la vanne 1 est ouverte, et s'écouler par l'autre raccord. Le corps de vanne 2 peut être en métal, notamment en acier inoxydable ou autre métal résistant à la corrosion, ou en plastique.

Le corps de vanne 2 est assemblé à un chapeau 10 solidaire d'un actionneur 20, connu en lui-même et qui peut être de tout type, manuel, électrique, hydraulique ou pneumatique, combinaison de ceux-ci ou autre.

La vanne 1 comporte une membrane 6 interposée entre le corps de vanne 2 et le chapeau 10, et qui est actionnée par l'actionneur 20, de façon connue en soi, entre des positions d'ouverture et d'obturation. La vanne 1 peut être une vanne à membrane aseptique, réalisée pour éviter toute zone de rétention du fluide qui la traverse. La membrane 6 peut être une membrane composite comportant une couche support, de préférence en caoutchouc, par exemple en éthylène-propylène-diène monomère (EPDM), comprenant éventuellement une toile de renfort, et une couche d'étanchéité, de préférence en un polymère plastique, par exemple en polytétrafluoroéthylène (PTFE). La couche support et la couche d'étanchéité peuvent former une seule pièce ou deux pièces séparées, mises au contact l'une de l'autre. En variante, la membrane ne comporte qu'une seule couche, de préférence en caoutchouc, par exemple en EPDM. Qu'elle soit composite ou non, la membrane peut avoir une épaisseur comprise entre 0,8 et 12 mm.

La membrane 6 peut avoir, comme illustré, un contour sensiblement similaire au moins en partie, de préférence complètement similaire, à celui de la face en regard du corps de vanne 2.

La membrane 6 peut présenter une excroissance latérale 6a, dépassant du corps de vanne 2 et de la base du chapeau 10 lorsque la vanne 1 est assemblée. Cette excroissance peut présenter des informations de traçabilité ou autres.

La membrane 6 peut comporter, comme illustré, un insert 6c permettant de connecter par tout moyen approprié, notamment par fixation baïonnette ou autre, la membrane au mécanisme de l'actionneur 20. En variante, la membrane ne comporte pas d'insert.

L'insert 6c peut être venu de moulage par injection avec le reste de la membrane ou rapporté sur la membrane. L'insert 6c peut comporter tout relief de couplage au mécanisme 20a de l'actionneur.

La membrane 6 peut présenter une partie centrale 6d, notamment sensiblement circulaire en vue de dessus, bombée connectée à l'insert 6c. La membrane 6 peut présenter une partie périphérique 6e plane, notamment d'épaisseur constante, entourant la partie centrale bombée 6d.

Le chapeau 10 assure l'étanchéité interne de la vanne 1 en venant en appui contre la membrane.

Le chapeau 10 peut être en métal, notamment en acier inoxydable ou tout autre métal résistant à la corrosion ou en plastique.

Le chapeau 10 comporte, sur sa face intérieure 10a tournée vers la membrane 6, des fûts 17 taraudés intérieurement pour recevoir des éléments de fixation 16 constitués dans l'exemple considéré par des vis à tête 40, de préférence au standard ISO CHC. Les éléments de fixation 16 sont de préférence métalliques, notamment en acier inoxydable ou en un autre métal, notamment résistant à la corrosion.

Les fûts 17 présentent en bout une portion tronconique 17a.

Dans l'exemple illustré, le chapeau 10 présente un contour de forme carrée à coins arrondis en vue de dessous, et les éléments de fixation 16 sont au nombre de quatre, étant disposés dans les coins du carré.

La membrane 6 comporte des trous 6b de section circulaire pour le passage des fûts 17.

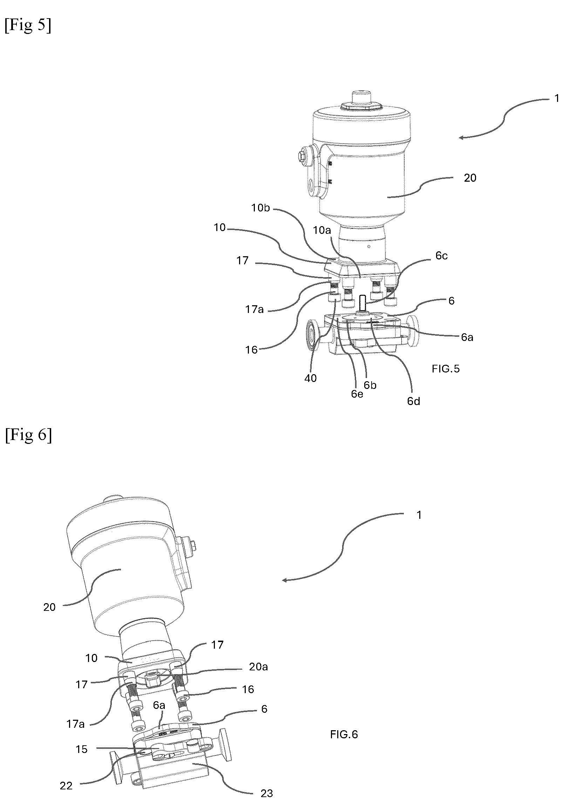

Le corps de vanne 2 est traversé, comme visible sur la figure 6, par quatre ouvertures 22 pour le passage des éléments de fixation 16, ces ouvertures 22 étant par exemple, comme illustré, disposées par paires de part et d'autre d'un renflement central 23 du corps de vanne, formant saillie à l'opposé de l'actionneur 20.

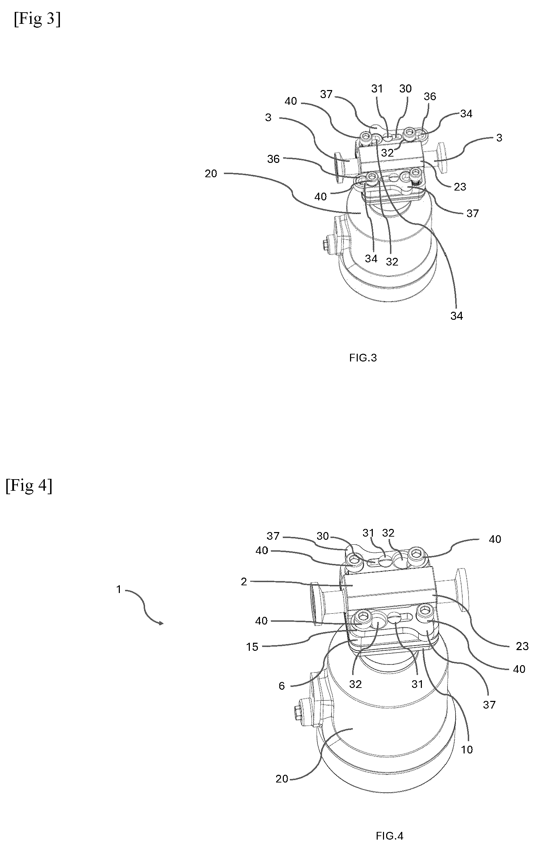

Deux éléments de verrouillage 15 sont montés captifs sur le corps de vanne 2, étant mobiles chacun entre une position déverrouillée représentée à la figure 3 et une position verrouillée représentée à la figure 4.

Chaque élément de verrouillage 15 présente en son centre une lumière oblongue 30 dans laquelle est engagé un élément de maintien tel qu'une vis 31, laquelle retient ainsi l'élément de verrouillage sur le corps de vanne 2 tout en lui permettant de se déplacer entre les positions verrouillée et déverrouillée.

Chaque élément de verrouillage 15 peut être découpé ou estampé dans une plaque métallique, notamment en acier inoxydable. En variante, chaque élément de verrouillage est moulé en métal, notamment en acier inoxydable ou acier traité avec un revêtement de surface. Chaque élément 15 peut éventuellement être soumis à un traitement thermique de durcissement de surface.

Chaque élément de verrouillage 15 comporte, comme visible notamment sur la figure 3, une ouverture 32 pour le passage de la tête 40 de l'un des éléments de fixation 16 lorsque l'élément de verrouillage 15 est en position déverrouillée.

Chaque élément de verrouillage 15 comporte également deux ouvertures 34 plus étroites que les têtes 40 des éléments de fixation 16, qui accueillent les tiges filetées de ces derniers lorsque l'élément de verrouillage 15 est en position verrouillée.

L'une des ouvertures 34 débouche sur l'ouverture 32 tandis que l'autre ouverture 34 débouche à une extrémité longitudinale de l'élément de verrouillage 15.

Des lamages 36 dont le diamètre est légèrement supérieur à celui des têtes 40 sont présents sur la face externe de l'élément de verrouillage 15, étant centrés sur les axes respectifs des éléments de fixation 16 lorsque l'élément de verrouillage 15 est en position verrouillée.

Chaque élément de verrouillage 15 peut présenter une patte 37 qui fait saillie latéralement, que l'opérateur peut pousser ou titrer pour faire coulisser l'élément de verrouillage entre ses positions déverrouillée et verrouillée, au cours de l'assemblage de la vanne.

La disposition des deux éléments de verrouillage 15 peut être symétrique par rapport à l'axe longitudinal X de la vanne, comme illustré.

Le renflement central 23 peut être délimité latéralement par des flancs rectilignes qui peuvent contribuer au guidage de chaque élément de verrouillage 15 dans son déplacement.

Le montage du corps de vanne 2 peut s'effectuer de la manière suivante.

Les éléments de fixation 16 étant partiellement vissés dans les fûts 17, la membrane 6 est mise en place sur le chapeau 10 en étant engagée sur les fûts 17, lesquels peuvent contribuer à son positionnement. En variante, la membrane 6 est posée sur le corps de vanne 2.

Ensuite, le chapeau 10 peut être engagé sur le corps de vanne 2 en ayant pris soin au préalable de positionner les éléments de verrouillage 15 en position déverrouillée.

Les éléments de verrouillage 15 peuvent ensuite être déplacés en position verrouillée, ce qui assure le maintien du chapeau 10 sur le corps de vanne 2 et libère les mains de l'opérateur.

Les éléments de fixation 16 peuvent être serrés sur les éléments de verrouillage 15. Le serrage des éléments de fixation 16 sur les éléments de verrouillage assure une bonne compression des zones périphériques de la membrane 6. Le contour des lamages 36 constitue un relief s'opposant au déplacement des éléments de verrouillage 15 vers la position de montage, en cas de desserrage léger d'un élément de fixation 16. Au cours de l'utilisation de la vanne et notamment à cause des étapes de stérilisation, un fluage peut être observé, résultant en une perte de serrage. En cas de perte de serrage, la présence des lamages 36 peut contribuer à sécuriser la vanne et éviter qu'elle ne se déverrouille en favorisant le quasi-encastrement des têtes 40 des éléments de fixation 16 dans les éléments de verrouillage.

Le remplacement de la membrane 6 s'effectue de manière similaire, en desserrant les éléments de fixation 16, puis en déplaçant les éléments de verrouillage 15 pour libérer les têtes 40 et permettre de séparer le chapeau 10 du corps de vanne 2.

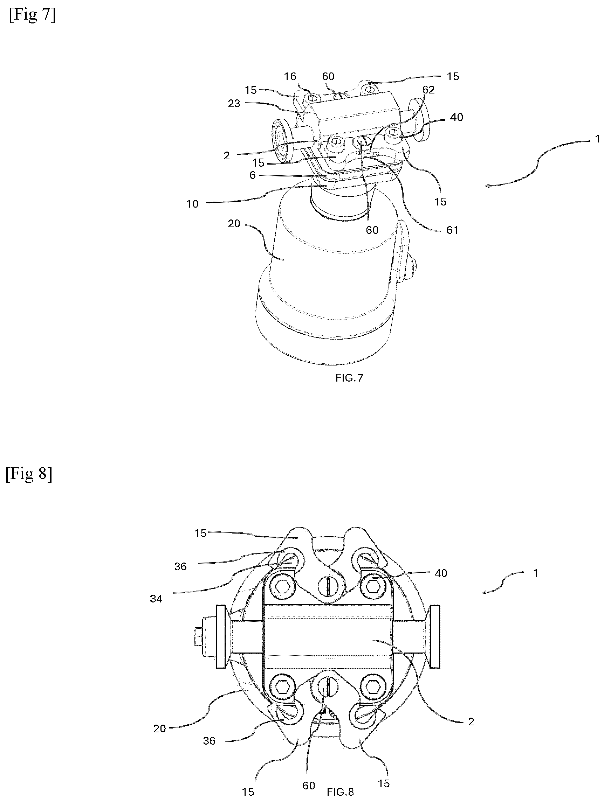

La variante des figures 7 à 9 ne diffère de l'exemple qui vient d'être décrit que par la forme des éléments de verrouillage 15 et leur montage sur le corps de vanne 2.

Dans l'exemple de ces figures, la vanne 1 comporte quatre éléments de verrouillage 15 rotatifs, montés par paires autour d'axes de rotation communs, de part et d'autre du renflement central 23.

Chaque élément de verrouillage 15 se présente sous la forme d'un crochet ayant une ouverture 34 agencée pour s'engager sur la tige filetée d'un élément de fixation 16, mais suffisamment étroite pour en bloquer la tête 40.

Des lamages 36 sont réalisés sur la face externe des éléments de verrouillage 15, dans le même but que détaillé ci-dessus.

Le pivotement des éléments de verrouillage 15 d'une même paire peut être assuré par un pivot tel qu'une vis 60, fixé dans le corps de vanne 2.

Les éléments de verrouillage 15 présentent des portions amincies 61 et 62 et décalées dans le sens de l'épaisseur des éléments 15, qui se superposent dans la région d'articulation autour de la vis 50, afin de permettre aux deux éléments 15 de pivoter dans un même plan, les faces externes des éléments 15 se situant ainsi au même niveau.

Le débattement angulaire des éléments de verrouillage 15 est suffisant pour qu'en position déverrouillée e, les éléments 15 n'interfèrent pas avec le passage des têtes 40 des éléments de fixation 16, comme illustré sur la figure 8.

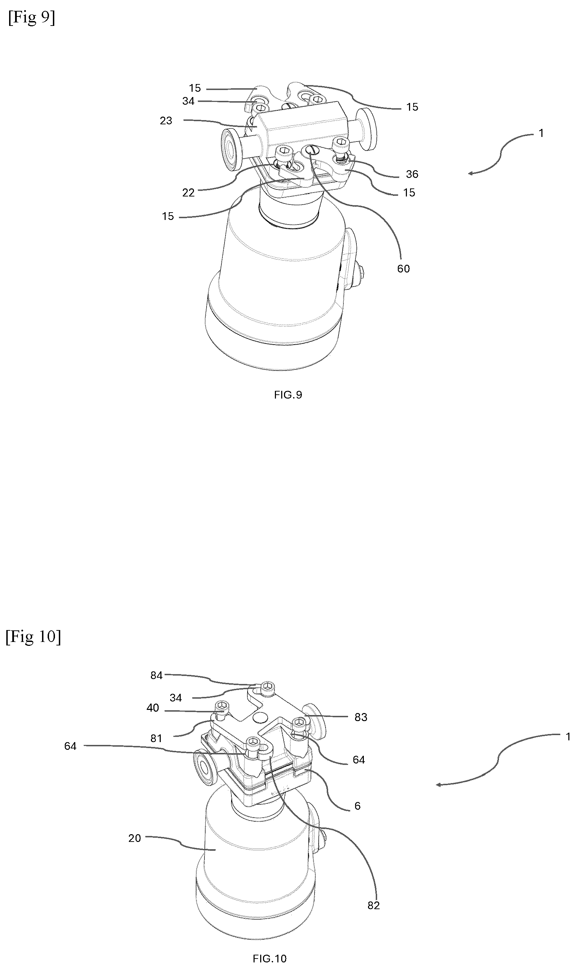

La variante de réalisation des figures 10 à 12 diffère des précédentes notamment par le fait que la vanne 1 comporte un unique élément de verrouillage 15 qui est agencé pour venir simultanément sous toutes les têtes 40 des éléments de verrouillage 16, en position verrouillée.

Dans cet exemple, l'élément de verrouillage 15 présente en vue de dessous une forme générale de H, avec quatre branches 81 à 84, étant articulé en son centre sur le corps de vanne 2 au moyen d'un élément d'articulation 88 tel qu'une vis, pour tourner autour de l'axe longitudinal X de la vanne 1.

Le corps de vanne 2 peut présenter une face 2b en regard de l'élément de verrouillage 15, dont la forme est différente de celle illustrée sur les figures qui viennent d'être décrites, en raison de la présence dans les coins de zones 64 sensiblement à la même hauteur que son centre, et où débouchent les ouvertures 22 servant au passage des têtes 40 des éléments de fixation 16.

La longueur des éléments de fixation 16 est adaptée en conséquence, afin de permettre d'engager sous les têtes 40, avant serrage, l'élément de verrouillage 15.

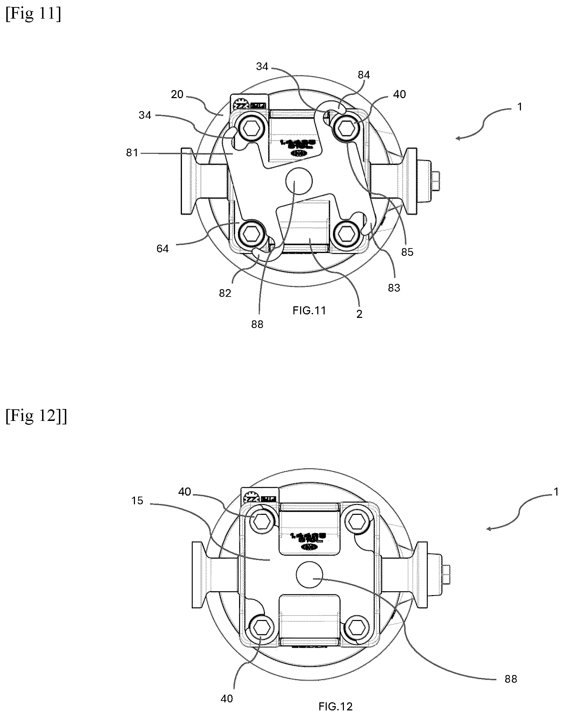

Comme on peut le voir sur la figure 11, les branches 81 à 84 de l'élément de verrouillage présentent des ouvertures 34 pour accueillir la tige filetée des éléments de fixation 16 lorsque l'élément de verrouillage 15 est en position verrouillée.

Les branches 81 et 83, diamétralement opposées, sont symétriques l'une de l'autre par rapport à l'axe d'articulation de l'élément de verrouillage 15.

Il en est de même des branches 82 et 84. Ces dernières, à la différence des branches 81 et 83, comportent en outre chacune une encoche 85 en forme d'arc de cercle pour le passage des têtes 40 lorsque l'élément de verrouillage 15 est en position déverrouillée.

Dans tous les exemples de réalisation, la face externe 10b du chapeau 10 située du côté de l'actionneur 20 peut être dépourvue de renfoncement ou d'aspérités, comme illustré, ce qui facilite son nettoyage.

Bien entendu, l'invention n'est pas limitée aux exemples illustrés.

On peut notamment réaliser les éléments de verrouillage autrement encore. Les éléments de fixation peuvent être disposés ailleurs que dans les coins. Le corps de vanne peut présenter un contour de forme autre, notamment circulaire.

Il peut aussi y avoir un nombre différent d'éléments de fixation, par exemple trois, cinq ou six.

Le corps de vanne et le chapeau peuvent avoir des formes différentes.

Les trous de la membrane et les ouvertures de l'élément de verrouillage peuvent avoir des formes autres.

La retenue des éléments de verrouillage en position verrouillée en cas de léger desserrage des éléments de fixation peut se faire autrement que par une coopération entre les têtes des éléments de fixation et les éléments de verrouillage, par exemple au moyen d'une coopération l'élément de verrouillage et un relief correspondant du corps de vanne. L'expression « comportant un » doit être comprise comme étant synonyme de « comprenant au moins un », sauf si le contraire est spécifié.

## Revendications

1. Vanne (1) comportant :
- un corps de vanne (2) traversé par des ouvertures (22),
- une membrane obturatrice (6),
- un chapeau (10) rapporté sur la membrane obturatrice,
- une pluralité d'éléments de fixation (16) fixés sur le chapeau (10), présentant chacun une tête (40) dépassant d'une ouverture correspondante (22) du corps de vanne, et
- au moins un élément de verrouillage (15) d'au moins l'un desdits éléments de fixation, maintenu captif sur le corps de vanne, mobile entre une position déverrouillée où il permet le passage de la tête du ou des éléments de fixation correspondants et une position verrouillée où il s'engage sous la tête du ou des éléments de fixation pour permettre la fixation du chapeau (10) sur le corps de vanne (2) par serrage du ou des éléments de fixation (16).

2. Vanne (1) selon la revendication 1, le ou chaque élément de verrouillage (15) étant monté de façon à pouvoir coulisser sur le corps de vanne (2).

3. Vanne selon la revendication 2, le ou chaque élément de verrouillage (15) étant agencé pour s'engager simultanément sous les têtes (40) de deux éléments de fixation (16) en position verrouillée.

4. Vanne selon la revendication 3, comportant quatre éléments de fixation (16) disposés deux à deux de part et d'autre d'un renflement (23) du corps de vanne (2), chaque élément de verrouillage étant monté d'un côté dudit renflement, notamment les éléments de verrouillage étant montés symétriquement par rapport à un axe longitudinal (X) de la vanne.

5. Vanne selon l'une quelconque des revendications 2 à 4, le ou chaque élément de verrouillage comportant une ouverture (32) permettant le passage de la tête (40) de l'un des éléments de fixation (16) en position déverrouillée.

6. Vanne selon la revendication 1, l'élément de verrouillage (15) étant monté rotatif sur le corps de vanne (2).

7. Vanne selon la revendication 6, comportant deux éléments de verrouillage (15) montés rotatifs autour d'un axe de rotation commun (60).

8. Vanne selon la revendication 7, les éléments de verrouillage (15) comportant chacun à une extrémité une portion amincie (61 ;62) traversée par un trou, les portions amincies étant décalées dans l'épaisseur de l'élément de verrouillage de manière à se superposer au niveau de l'articulation tout en permettant aux éléments de verrouillage de pivoter dans un même plan.

9. Vanne selon l'une des revendications 7 et 8, comportant deux paires d'éléments de verrouillage (15) disposées de part et d'autre d'un renflement (23) du corps de vanne.

10. Vanne selon la revendication 6, l'élément de verrouillage (15) étant agencé pour s'engager simultanément sous toutes les têtes (40) des éléments de fixation, notamment l'élément de verrouillage présentant en vue de dessous une forme générale de H, avec quatre branches (81, 82, 83, 84) et une articulation centrale (88), au moins deux branches diamétralement opposées comportant une encoche, de préférence en forme d'arc de cercle, agencée pour permettre le passage de la tête d'un élément de fixation correspondant par un mouvement axial, toutes les branches présentant une ouverture (34) en forme générale de U définissant un appui pour la tête d'un élément de fixation respectif une fois l'élément de verrouillage amené dans la position verrouillée.

11. Vanne selon l'une quelconque des revendications précédentes, l'élément de verrouillage (15) comportant, de préférence au niveau d'au moins une, et mieux de chaque ouverture (34) destinée à recevoir un élément de fixation (16) à verrouiller, un relief (36) de retenue s'opposant à un mouvement de l'élément de verrouillage vers la position déverrouillée, notamment un relief formé par le contour d'un lamage (36) centré sur l'axe de l'élément de fixation et de diamètre suffisant pour recevoir ladite tête.

12. Vanne (1) selon l'une quelconque des revendications précédentes, le chapeau (10) comportant des fûts (17) taraudés intérieurement, traversant des trous correspondants (6b) de la membrane (6), et les éléments de fixation (16) étant des vis, notamment au standard ISO CHC, vissées dans ces fûts.

13. Vanne selon la revendication 12, les fûts présentant une extrémité libre (17a) de forme tronconique.

14. Vanne (1) selon l'une des revendications 12 et 13, les fûts (17) étant réalisés d'une seule pièce de manière monolithique avec le chapeau (10).

15. Procédé de changement d'une membrane (6) d'une vanne (1) selon l'une quelconque des revendications 1 à 14, comprenant les étapes consistant à :
- Dévisser, de préférence en moins de dix tours, mieux moins de cinq, les éléments de fixation (16),
- déplacer le ou les éléments de verrouillage (15) dans la position déverrouillée,
- séparer le corps de vanne (2) du chapeau (10),
- remplacer la membrane (6) par une nouvelle,
- replacer le corps de vanne sur le chapeau, en faisant passer les éléments de fixation (16) à travers les ouvertures du corps de vanne,
- amener le ou les éléments de verrouillage en position verrouillée,
- serrer les éléments de fixation (16) pour fixer la membrane entre le corps de vanne et le chapeau.
